# EUROPEAN PATENT SPECIFICATION

(11) **EP 3 356 739 B1**
(45) Date of publication and mention of the grant of the patent: **28.07.2021**
(21) Application number: 16781307.0
(22) Date of filing: 29.09.2016
(51) Int. Cl.: F24F 11/30, F24F 3/16, F24F 11/39, F24F 8/167, F24F 11/65

(54) **GAS FILTRATION SYSTEM AND METHOD**
GASFILTRATIONSSYSTEM UND -VERFAHREN
PROCÉDÉ ET SYSTÈME DE FILTRATION DE GAZ

(30) Priority: 30.09.2015 WO PCT/CN2015/091289; 17.11.2015 EP 15195051
(43) Date of publication of application: 08.08.2018
(73) Proprietor: Koninklijke Philips N.V., 5656 AG Eindhoven (NL)
(72) Inventor: SCHEJA, Michael, Martin, 5656 AE Eindhoven (NL); RONDA, Cornelis, Reinder, 5656 AE Eindhoven (NL); MARRA, Johan, 5656 AE Eindhoven (NL)
(74) Representative: Tassignon, Tom
(86) International application number: PCT/EP2016/073285
(87) International publication number: WO 2017/055466

(56) References cited:
- EP-A1- 0 864 348
- EP-A2- 1 102 013
- CN-A- 1 873 334
- CN-U- 204 593 639
- DE-A1-102005 055 464
- JP-A- S63 194 711
- US-A1- 2007 105 494

## Description

### FIELD OF THE INVENTION

The invention relates to methods and apparatus for filtering gaseous pollutants from a gas to be filtered.

### BACKGROUND OF THE INVENTION

Indoor air pollution presents a significant health hazard in many urbanized areas across the world. Air pollution sources are encountered both outdoors (e.g. from motor vehicles and industry) and indoors (from cooking, smoking, candle burning, incense burning, outgassing building/decoration materials, use of outgassing waxes, paints, polishes etc.). The pollution level indoors is often higher than outdoors, especially for volatile organic compounds. At the same time, many people reside most of their time indoors and may thus be almost continuously exposed to unhealthy levels of air pollution.

One method to improve the indoor air cleanliness is by installing an air purifier indoors which is capable of continuously recirculating the indoor air through a cleaning unit comprising one or more air filters. Another method to improve the indoor air cleanliness is by applying continuous ventilation with filtered outdoor air. In the latter case, the air filter(s) are usually comprised in a heating, ventilation and air conditioning (HVAC) system capable of temperature adjustment, ventilation, and of cleaning the ventilation air drawn from outdoors by passing it first through one or more air filters before releasing it indoors. Ventilation with cleaned outdoor air displaces polluted indoor air and dilutes the pollution level therein.

For removing polluting gases from air, use of often made of activated carbon filters which are capable of adsorbing/removing/decomposing many volatile organic hydrocarbon gases (VOCs) and several inorganic gases (NO₂, O₃, radon) from air. The activated carbon material is usually present as granules that are contained in an air-permeable filter frame structure.

Indoor air pollution with formaldehyde (CH₂O) gas is a particular problem affecting the health and well-being of many people. Formaldehyde is continuously emitted from indoor sources such as building materials, decoration material, and furniture. Its indoor concentration can increase to well above the clean air guideline concentrations for formaldehyde (0.05 mg/m³ at 8 hour exposure, 0.10 mg/m³ at 1 hour exposure) when the room is poorly ventilated. High ventilation conditions achieved by opening windows and doors are not always feasible due to outdoor weather conditions, an uncomfortable outdoor temperature, and/or safety considerations.

For removing formaldehyde and/or small acidic gases (SO₂, acetic acid, formic acid, HNOₓ) from air, activated carbon as such is also not very effective. Instead, use can be made of impregnated filter materials capable of chemically absorbing these gases from air. Absorption can occur via acid-base interactions or through a chemical condensation reaction. Activated carbon granules can be used as the impregnation carrier, but also hydrophilic fibrous cellulose paper, glass-fiber sheet material, and porous ceramic honeycomb structures are suitable for this purpose. When using such filters structures, an indoor air purifier re-circulates the air in a given enclosure through a filter stack comprising the absorption filter.

In absorption-based air filters, binding is usually based on chemisorption for example using corrugated, tris-based formaldehyde filters, or physi-sorption. Such binding represents a reversible reaction, which means that when an absorbing filter material is exposed to a gaseous pollutant with an affinity to the filter substrate, not only absorption will take place, but gas molecules already bound to the substrate can overcome the energy barrier and desorb back into the air (desorption). Thus, when clean air is passed through an absorption filter that is partially loaded with absorbed gas, such as formaldehyde gas, desorption of formaldehyde gas may occur which makes the absorption filter become a source of formaldehyde gas itself.

In general, the desorption rate increases with increased degree of loading (amount of gas molecules bound to the filter material) or decreasing partial pressure of the gaseous pollutant in the gas phase.

Since desorption requires energy to overcome the forces responsible for holding the gaseous pollutant bound to the substrate (e.g. Van der Waals forces, chemical bonds, etc.), introduction of external energy into the system (e.g. in form of heat) can increase desorption rates.

Another approach which can be used to eliminate gaseous air pollutants is to break them down into smaller molecules via oxidation. Oxidation occurs naturally, but at relatively low rates. Oxidation rates can be strongly increased by using catalysts (e.g. titanium oxide in the case of PCO). Applications include photo catalytic oxidation (PCO) and thermal oxidation. Heating a catalyst can also result in increased oxidation rates.

Air purifiers utilizing absorption or adsorption based filters for the removal of gaseous pollutants from indoor air have a number of disadvantages.

The user is often faced with the problem of manually selecting an operation mode from a number of options without having the required background information to make a sound decision. This may lead to arbitrary choices and a selection of an inappropriate mode (inappropriate can for example mean that there is a more suitable operation mode for this situation available than the one selected by the user).

In many products, operation modes only differ in the fan speed. This can limit the potential of an air purifier. Absorption or adsorption based gas filters can, under certain conditions, release the accumulated pollutant gas. This may expose inhabitants to potentially harmful concentrations.

Absorption or adsorption based gas filters also have a limited capacity for their target molecules and do not make purposive use of the possibility to regenerate, which could lead to a longer lifetime.

US 2007/105494 A1 discloses a fume hood with a system for monitoring filter life and an improved design for extending filter life. Filter efficiency is determined based on data from sensors located upstream and downstream of the filter.

CN 204593639U discloses an air purifier featuring automatic feedback control based on the monitoring of air quality. The purpose of CN 204593639U is to provide an air purifier which adjust its settings automatically. Sensors inside the air purifier perform air sensing. Based on the sensor data, settings of components of the air purifier are adjusted.

### SUMMARY OF THE INVENTION

Desirable would be a filter and filtering method which allows the filter to be operated in an optimum operating mode in a simple manner.

The invention is defined by the independent claims. The dependent claims define advantageous embodiments.

Examples in accordance with a first aspect of the invention provide a system for removing a target gas from a gas to be filtered in a space, the system comprising:
a sensor arrangement, which comprises a gas sensor for sensing a concentration of a target gas in the space;
an air purifier which comprises a filter for filtering the target gas from the air; and
a control system which comprises at least a ventilation system for controllably driving air through the filter, wherein the control system is adapted to implement different modes of operation of the filtration system,
wherein the control system is adapted, based on the current sensor arrangement signals, the previous history of the sensor arrangement signals and the previously adopted modes of operation, to:
   determine a degree of filter loading with the target gas; and
   select a mode of operation based on the degree of filter loading and the current sensor arrangement signals.

This system makes an automatic selection of a mode of operation by taking account of a degree of filter loading and a current concentration. These two pieces of information enable the effect of the operation of the filter to be determined. For example, if the filter is heavily loaded, it will not be able to perform filtering when there is already a relatively low concentration. It will instead operate in a desorption mode.

A number of zones of the parameter space of the filter loading and the concentration may be defined, and each may then correspond to a different preferred mode of operation. There may for example be between 3 and 10 such zones, each with an associated mode of operation.

The filter comprises an absorption filter or an adsorption filter. The filter may be a solid or a liquid having chemicals for binding the target gas. There may be one or more filters of the same or different types. At least one of the filters has a reversible function, and will thus perform absorption/adsorption or desorption, in dependence on the filter loading and the prevailing concentration. The control system is further adapted to determine from the degree of filter loading with the target gas and the current sensor arrangement signals when filter regeneration (desorption) is taking place and when air filtering (absorption or adsorption) is taking place.

Note that in this context the term "desorption" is used to mean the reverse of both adsorption and absorption, i.e. the release process which is the opposite of the filtering process.

The control system may comprise a heater for heating the filter. This may be used to tune the filter function so that different options are used in different modes.

The filter may further comprise a catalyst filter (in addition to an air purifier absorption/adsorption filter), for example a photo-catalytic filter and the control system then further comprises a light source for illuminating the photo-catalytic filter. This provides another different option for use in a different mode. In other embodiments, a catalyst filter in the form of a thermal-catalytic filter may be used, and the control system then further comprises a heat source for heating the thermal catalytic filter.

The control system is for example adapted to switch off the air purifier when it is determined that the concentration is above a threshold and the filter is operating in a desorption regime. This prevents the air purifier from increasing the room concentration.

The control system may further be adapted to provide an output which indicates when additional ventilation of the space with outdoor air is desirable. This enables the filter to be regenerated for example using outdoor air when there is high loading with indoor pollutants.

The gas sensor may comprise a formaldehyde sensor, and the filter comprises a reversible absorption and/or adsorption formaldehyde filter.

Note that the sensor arrangement may be an integral part of the air purifier system, or it may be a stand-alone sensor or part of a sensor box. In the latter case, communication means are provided (e.g. wireless via WiFi) to allow the sensor to communicate the measurement results to the remainder of the system.

Examples in accordance with another aspect of the invention provide a method of controlling a filtration system for removing a target gas from a gas to be filtered in a space, the method comprising:
sensing a concentration of a target gas in the space;
filtering the target gas from the air using an air purifier; and
implementing different modes of operation of the filtration system,
wherein the method comprises, based on the current sensed concentration, the previous history of the sensed concentration and the previously adopted modes of operation:
   determining a degree of filter loading with the target gas; and
   selecting a mode of operation based on the degree of filter loading and the current sensor arrangement signals.

This method provides automatic selection of a mode of operation by taking account of a degree of filter loading and a current concentration. In this way, a safe and effective mode of operation may be chosen without requiring user input.

The filtering makes use of an absorption filter or an adsorption filter. The method comprises determining, from the degree of filter loading with the target gas and the current sensed concentration, when filter absorption or adsorption is taking place and when filter desorption is taking place, and optionally also the rate of absorption or absorption, or desorption.

One mode of operation may comprise heating the filter and another mode of operation may comprise illuminating a photo-catalytic filter.

The air purifier may be switched off when it is determined that the concentration is above a threshold and the filter is operating in a desorption regime.

The method may be implemented by a computer program comprising code for implementing an algorithm.

### BRIEF DESCRIPTION OF THE DRAWINGS

Examples of the invention will now be described in detail with reference to the accompanying drawings, in which:
Fig. 1 shows a first example of a gas filtration system;
Fig. 2 shows how different operating modes can be defined by different prevailing concentration and filter loading conditions;
Fig. 3 shows air purifier control method; and
Fig. 4 shows a second example of a gas filtration system.

### DETAILED DESCRIPTION OF THE EMBODIMENTS

The invention provides a filtration system for removing a target gas from a gas to be filtered in a space. The system (and the air purifier in particular) has different modes of operation. Based on sensing of the current level of the target gas, the previous history of the sensing signals and the previous modes of operation, a degree of filter loading with the target gas can be determined. This information and the current sensed level of the target gas are together used to select a mode of operation. In particular, the filter loading and the current target gas level is used to determine whether absorption or desorption will take place and which rates these processes will occur, which provides the basis for deciding what operation mode should be executed.

In this way, the gas filtration system, i.e. air purifier, is capable of collecting and analyzing information relevant for the proper choice of an operation mode.

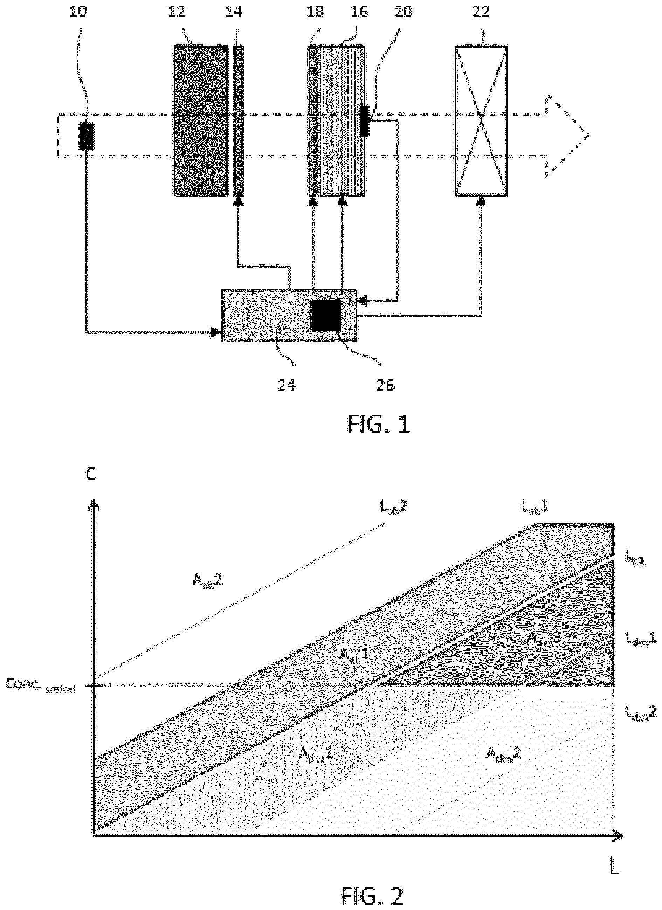

Fig. 1 shows an air purifier, in which the air flow is from left to right as shown by the dotted arrow. The air purifier comprises a gas sensor 10 for sensing a concentration of a target gas. This for example provides real time formaldehyde concentration information. The sensor may be an integral part of the system or it may be remote from the main housing of the air purifier and then communicate with the remainder of the system, for example wirelessly.

The air purifier further comprises an absorption-based gas filter 12 (e.g. an activated carbon filter, an impregnated filter for formaldehyde etc.) for filtering the target gas from the air.

For some examples of filter, the effectiveness or functionality of the filter 12 is for example dependent on the temperature, and a heater 14 is shown for controlling the filter temperature.

A catalyst 16 may also be used as a filter, and for a photo-catalytic filter, the catalyst activity may then be controlled by using a light source 18. In another embodiment, the catalyst 16 can also be a thermal catalyst and in this case, it activity may then be controlled by a heater 18. A sensor 20 is provided for detecting the state of the catalyst, such as a degree of poisoning with the target gas.

The overall system may have only an absorption based filter, or it may have both types of filter as shown.

When use is made of a catalytic filter, the user can be provided with information as to whether the catalytic filter needs regeneration or needs to be replaced based on the information from the sensor 20.

A ventilation system such as a fan 22 is provided at the outlet.

The gas sensor 10 and catalyst sensor 20 together comprise a sensor arrangement. Together, the heater 14, catalyst 16, light source 18 and fan 22, as well as a master control unit, comprise a control system. As a minimum, the control system includes the ventilation system for controllably driving air through the filter, and the other control devices are optional. Their use will depend on the type or types of filter used.

The control system is adapted to implement different modes of operation of the gas filtration system.

A master control unit in the form of a controller 24 is provided for controlling each other element of the control system. The controller 24 takes account of the current signals from the sensor arrangement 10, 20, the previous history of the sensor arrangement signals, and the previous modes of operation. Using this information, it is possible to determine a degree of filter loading of the absorption filter with the target gas and then to select a suitable mode of operation. The mode may be selected based on the degree of filter loading compared to the current concentration of the target gas in the air space being cleaned.

The light source 14 has a controllable light intensity, and it may be used when use is made of a photo-catalytic oxidation filter (PCO). The heating element 14 has an adjustable output temperature, preferably with feedback control. The fan 22 has an adjustable speed, and the catalyst 16 may have an adjustable humidity and/or temperature. Different combinations of these adjustable parameters then define operating modes of the overall control system.

Preferably the control system comprises the fan and at least one further controllable actuator, in addition to the controller 24.

Information is needed which enables the loading state of the absorption filter to be determined. This may be in the form of data stored in a database 26 which is updated by, and stored on, an SoC (System on Chip) or on an external server. The sensor 20 provides this information in respect of a catalyst filter.

The controller 24 is responsible for collecting, analyzing and storing information from the various sources used in the system. Sets of pre-defined parameter values for each component are stored to define the different operation modes. The controller 24 can then control the adjustable parameters thereby inducing the desired operation mode.

Fig. 2 is used to explain the concept underlying the design of the filtration system. Fig. 2 plots two important factors determining the desorption and absorption behavior of an absorption process-based gas filter, which are the filter Loading L (x-axis) and the ambient concentration c in the room (y-axis). There is an equilibrium line labeled as Leq in Fig. 2 which describes all pairs (L, c) for which the level of absorption is equal to the level of desorption.

All pairs (L, c) above and below this equilibrium line Leq will lead to net absorption and net desorption, respectively. With increasing distance from the equilibrium line Leq, the desorption or absorption rates gradually increase.

For air purifiers with an absorption-based formaldehyde filter and in an in-home environment, a diagram can be created where pairs (L, c) belong to discrete zones each have specific characteristics, as listed in Table 1 below. This table defines the five zones shown in Fig. 2 together with the equilibrium line. In other examples, the zones in Fig. 2 can be further subdivided.

**Table 1**

| *Zone* | *Characteristic* | *Effect of running purifier on room CH₂O concentration* |
|---|---|---|
| **A_{ab}2** | Absorption >> Desorption = Net adsorption @ high rate | Fast decrease |
| **A_{ab}1** | Absorption > Desorption = Net adsorption @ low rate | Slow decrease |
| **A_{des}1** | Absorption < Desorption = Net desorption @ low rate | Slow increase |
| **A_{des}2** | Absorption << Desorption = Net desorption @ high rate | Fast increase |
| **A_{des}3** | Net desorption | Increase to values > Conc. _{critical} |
| L_{eq} | Absorption = Desorption | No change in room CH₂O conc. |

The definition of zones in this way may be applied to any gas filter based on an adsorption process. In this model, every pair (L, c) is allocated to a specific zone. The actual values for L and c are determined by the intrinsic properties of a particular filter.

An example is now described where the gas filter is a formaldehyde filter and the gas sensor is thus a formaldehyde sensor. The concept can however be applied to other gases or combinations thereof.

Considering the above, it is clear that a CH₂O filter which is used in an in-home environment will show very different behavior depending on the c and L value at the time the air purifier is started. For instance, when a pair (L, c) is in the region A_{ab}2 in Fig. 2, the air purifier will effectively reduce the room CH₂O concentration. This gradual decrease reduces CH₂O partial pressure which results in a decreased absorption rate. The effect on loading L during this time can be neglected if the filter has a reasonably high capacity.

Ultimately, the pair (L, c) will move to zone A_{ab}1, where the actual removal rate (or real-time clean air delivery rate, CADR) becomes significantly lower. At this time, it would make sense to increase the removal performance for the gaseous pollutant.

This is an option since the system is able to track the current position in the L-c-diagram and thus has an overview of the present operating conditions by acquiring and analyzing the relevant status information. In this example, the relevant information is the room formaldehyde concentration and the loading status of the gas filter.

The control system may be configured to adjust the internal control parameters by switching from a first purification mode (PI) to a second purification mode (P2). Each mode corresponds to a specific set of component parameter values, including at least a fan speed. Purification mode 1 is for example characterized by a high fan speed, hence high flow rate (preferably in the range of 200 and 400 m³/h) and a deactivated light source 18. Purification mode 2 uses the same flow rate as purification mode 1, but the light source 18 is switched on. In the case of a catalyst which works at room temperature without the need of light, a heating element might be activated in order to increase temperature of the catalyst.

The system does not require a catalyst filter. Without any catalyst, the desorption rate may be adapted to the natural ventilation in the different modes of operation. This can be done by tuning the fan speed, taking into account the reading from the sensor arrangement.

The aim is to increase the reaction rate of the catalyst, hence the performance of the air purifier, compensating for the lower absorption rate of the CH₂O filter in zone A_{ab}1.

In all cases where the pair (L, c) is below the equilibrium line L_{eq}, a net release of formaldehyde from a CH₂O filter will occur. The advantage is that this filter will be regenerated. Similar to the purification modes, it also makes sense to look into different scenarios which will enable a design of optimized regeneration modes and their proper choice during operation.

Again, an air purifier is started and a pair of values (L, c) is determined. If it falls into zone A_{des}1 (shown in Fig. 2), a net release from the formaldehyde filter will occur. The room CH₂O concentration lies below a critical value c_{critical} also shown in Fig. 2 which represents a safety threshold and can be set to e.g. 0.1 mg/m³ (WHO and GB/T safety threshold for indoor formaldehyde concentrations) or lower.

This situation is basically well-suited to regenerate the CH₂O filter. The challenge, however, is that regeneration will take place very slowly due to the slow desorption rate (shown in Table 1 above).

The components of the air purifier can be operated in a mode optimized for this scenario, regeneration mode 1 (R1).

In this mode, the heating element 14 is activated, and the flow rate decreased (e.g. to values between 10 and 50 m3/h). The aim is to increase the temperature of the CH₂O filter. The temperature increase of the latter will result in an increased desorption rate (due to locally lower partial pressure of CH₂O and higher probability that CH₂O molecules bound to the substrate can overcome the energy barrier required for dissociation), which is the desired outcome of this mode.

In another embodiment, the heating element is located upstream of the gas filter, not downstream.

Some embodiments may use a downstream located source of humidity such as an arrangement for generating water mist, instead of or as well as the heating element 14. In such a case, the delivered water will compete for the binding sites on the filter medium and therefore accelerate desorption of the gas bound to the filter. Thus, the operation of the source of humidity provides another parameter which can be used differently in different modes of operation.

Compared to zone A_{des}1, zone A_{des}2 is characterized by higher desorption rates (again shown in Table 1 above) which means that heating of the CH₂O filter is not required in regeneration mode 2 (R2). Therefore, this mode is characterized by a slow flow rate (low fan speed) and an activated light source 18. Both aspects increase the one-pass efficacy of the catalytic filter, which is necessary to efficiently remove the higher amount of filter-released CH₂O.

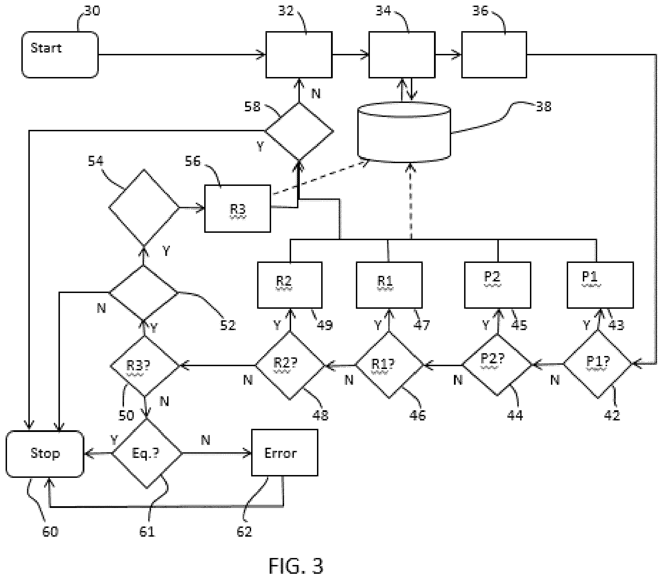

Fig. 3 shows a method of controlling an air purifier (i.e. a gas filtration system).

In step 30, the air purifier is started. In step 32 the ambient concentration of the target gas such as formaldehyde is measured. In step 34 a database 38 is accessed to obtain a current loading value of the filter used in the air purifier.

In step 36, it is determined in which zone of the diagram of Fig. 2 the loading and concentration values are located.

In step 42, it is determined if the zone is zone Aab2, i.e. one in which the filter is lightly loaded and there is a high concentration. If so, a first purification mode P1 is adopted in step 43.

In step 44, it is determined if the zone is zone Aab1, i.e. one in which there is still sufficient concentration and loading that the filter can still be loaded further, but with a smaller margin. If so, a second purification mode P2 is adopted in step 45.

As mentioned above, differences between the control settings for the different purification modes P1 and P2 may for example include whether or not a photocatalytic catalyst is activated, whether or not a heater is turned on (or the degree of heating), the air flow speed, and the provision of humidity in the flow.

In step 46, it is determined if the zone is zone Ades1, i.e. one in which the filter is more heavily loaded and there is a comparably low concentration. If so, a first regeneration mode R1 is adopted in step 47.

In step 48, it is determined if the zone is zone Ades2, i.e. one in which the filter is even more heavily loaded and/or there is an even lower low concentration. If so, a second regeneration mode R2 is adopted in step 49.

While the air purifier is operated in any of these modes, the database is updated so that historical information about the modes that have been used is stored. In this way, the loading of the filter can be tracked, based on the characteristics of each mode, the characteristics of the filter (filter identification can be used to communicate these characteristics, either directly or by accessing a database, e.g. over the internet) and how long they are operational.

In step 50, it is determined if the zone is zone Ades3, i.e. one in which the concentration exceeds the critical level, and the filter is so heavily loaded that it cannot reduce the concentration level. If so, a warning is provided to the user in step 52. If the user does not provide an acknowledgement of the warning, the air purifier is stopped in step 60. If the user does provide an acknowledgement of the warning in step 54, a third regeneration mode R3 is adopted in step 56 and again the database is updated.

The air purifier continues for a given time which is monitored in step 58. If the time is not up, the cycle is repeated with a new measurement of the concentration and an updated value for the filter loading. The cycle thus continues, possibly with changes in mode, until the set time is reached, when the cycle moves to step 60.

If step 50 does not confirm operation in the zone Ades3, there is a check if the values correspond to the line Leq, in step 61. If so, there is no point running the air purifier and it is stopped in step 60.

If no zone is found, there is an error, and an error message is given in step 62 before the air purifier is stopped.

This process means that the air purifier is able to properly deal with a situation where it is powered on at a pair of values (L, c) in zone A_{des}3. In this scenario, running the purifier would increase the CH₂O concentration even further above the safety threshold c_{critical}. This could also happen with a catalytic filter in the filter stack, namely when its one-pass efficacy is below 100% (which will usually be the case).

The automated mode selection eliminates this risk by identifying this scenario and notifying the user to prepare for regeneration mode R3.

The preparation could for instance mean that the user places the air purifier on a balcony or simply opens the windows. Only after confirmation by the user in step 52 or by autonomous detection (for example a rapid change in temperature, CO₂ or formaldehyde concentration in the room) that this has been done, the mode is executed.

If the regeneration is performed on the balcony, it is not essential to remove the desorbed pollutant efficiently since it will quickly dilute with the outdoor air. Therefore, the light source 18 can be off to safe energy in this mode R3. The fan speed can be relatively low (e.g. 20 m³/h) to save power. The heating element 14 can be off if the regeneration takes place for long time, e.g. during the night; or it can be on to further accelerate desorption, hence to shorten the time required for regeneration.

Thus, differences between the control settings for the different regeneration modes may also include whether or not a photocatalytic catalyst is activated, whether or not a heater is turned on (or the degree of heating), the air flow speed, and the provision of humidity in the flow.

If confirmation does not take place within a predefined period of time, the purifier powers off automatically. A corresponding notification could for example be sent to a user's mobile device.

As discussed above, the system can overcome intrinsic disadvantages of an absorption-based filter, leading to a purifier with longer life time. The design of the specific operation modes may be optimized to deal with different loadings and concentrations and this can further improve the performance. The mode selection can be fully automated as long as the loading and ambient concentration is known.

Other embodiments also take additional information into account such as room temperature, humidity, water content in the filter etc.

The system shown in Fig. 1 can realize all of the modes explained above. In one example, the loading information can be obtained from a database stored on a CPU of a purifier. The storage medium can also be an external server, provided that the air purifier is equipped with an internet connection. This database can be continuously updated based on information about the ambient concentration measured by the CH₂O sensor and taking account of the operation time in each mode. External data storage and processing can be useful in filter identification (based on performance or by a filter identifier) in case there is more than one filter type on the market or the performance of the filters is improved. This enables the use of up-to-date software, for each filter type.

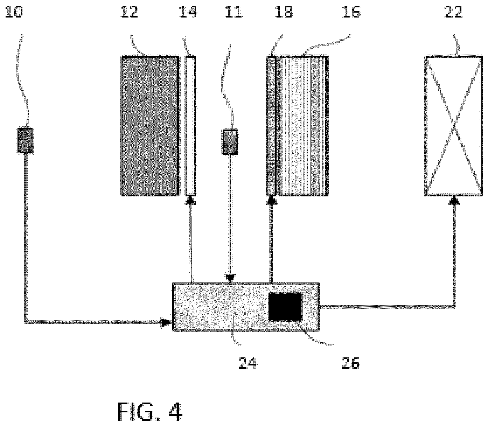

Alternatively, the filter loading could be derived in real-time through other approaches, e.g. by measuring the one pass efficacy of the filter by adding an additional sensor directly after the gas filter. This is shown in Fig. 4 where an additional sensor 11 is provided.

In another embodiment, the one-pass efficacy of the catalyst (e.g. the PCO filter in Fig. 1) is determined as well, by placing one gas sensor in front and another gas sensor after the catalytic filter (or PCO filter-light source unit). This information can be used to indicate the status of the catalyst and recommend replacement.

This invention can be applied in the area of indoor air purification, more specifically for automated mode selection of an air purifier.

As mentioned above, the system may also provide end of life estimation, by monitoring over time the gas concentration, and the modes that have been employed as well as other factors such as the relative humidity, the temperature.

The invention is of particular interest for removing formaldehyde gas from an indoor space. The system can be based on known sensors and filter designs, for example as disclosed in WO 2013/008170 and US 6071479. The formaldehyde sensor is capable of selectively measuring the ambient formaldehyde gas concentration over the course of time.

An example of a reversible formaldehyde absorption filter is disclosed in US 6071479. It features a corrugated paper structure wherein the porous paper material is impregnated with a mixture of a base (KHCO₃), a humectant (Kformate), and an organic amine (Tris-hydroxymethyl-aminomethane (Tris)). Preferably, the filter impregnation is carried out with an aqueous impregnant solution comprising:
KHCO₃ at a concentration preferably chosen in the 5 - 15% w/w range;
Kformate at a concentration preferably chosen in the 5 - 20% w/w range;
Tris at a concentration preferably chosen in the 5 - 25% w/w range.

For that purpose, a fixed volume of the impregnant solution is incorporated in the filter's paper structure per unit filter volume, followed by drying.

The above example is based on a reversible formaldehyde filter. The invention may be applied to other reversible filters. For example, an activated carbon filter or a zeolite filter may be used for adsorbing volatile organic hydrocarbon gases (VOCs) from air. The same system may be used for such filters. The required gas sensor is then a VOC sensor capable a sensing (a range of) VOCs that can be adsorbed on and desorbed from the activated carbon or zeolite adsorbents.

Examples of VOC sensors are a photo-ionization detector (PID), a metal-oxide semiconductor (MOX) sensor and an electrochemical sensor.

The space in which the system is used is typically in indoor space (i.e. inside a residential or commercial building), but the invention may equally be applied to other spaces, such as the enclosed space inside a car, coach, plane, train or other vehicle.

The invention is of particular interest for indoor air purifiers, ventilation or HVAC (heating, ventilation and air conditioning systems) and other air handling units.

As discussed above, embodiments make use of a controller. The controller can be implemented in numerous ways, with software and/or hardware, to perform the various functions required. A processor is one example of a controller which employs one or more microprocessors that may be programmed using software (e.g., microcode) to perform the required functions. A controller may however be implemented with or without employing a processor, and also may be implemented as a combination of dedicated hardware to perform some functions and a processor (e.g., one or more programmed microprocessors and associated circuitry) to perform other functions.

Examples of controller components that may be employed in various embodiments of the present disclosure include, but are not limited to, conventional microprocessors, application-specific integrated circuits (ASICs), and field-programmable gate arrays (FPGAs).

In various implementations, a processor or controller may be associated with one or more storage media such as volatile and non-volatile computer memory such as RAM, PROM, EPROM, and EEPROM. The storage media may be encoded with one or more programs that, when executed on one or more processors and/or controllers, perform at the required functions. Various storage media may be fixed within a processor or controller or may be transportable, such that the one or more programs stored thereon can be loaded into a processor or controller. The computer can, in some embodiments, be an external device such as a smart phone. In this case, all data needs to be sent from the sensors/air purifier to such an external device. This may allow to activate the disclosed functionalities once a service (e.g. in the form of an App) is purchased after the purchase of the air purifier.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage. Any reference signs in the claims should not be construed as limiting the scope.

## Claims

1. A filtration system for removing a target gas from a gas to be filtered in a space, the filtration system comprising:
a sensor arrangement (10), which comprises a gas sensor for sensing a concentration of the target gas in the space;
a filter (12) for filtering the target gas from the air, wherein the filter comprises an absorption filter or an adsorption filter; and
a control system which comprises a ventilation system (22) for controllably driving air through the filter, wherein the control system is adapted to implement different modes of operation of the filtration system, wherein the control system is adapted, based on current sensor arrangement signals, previous sensor arrangement signals and previous modes of operation, to:
determine a degree of filter loading with the target gas; and
select a mode of operation based on the degree of filter loading and the current sensor arrangement signals the filtration system being **characterized in that**:
the control system is further adapted to determine from the degree of filter loading with the target gas and the current sensor arrangement signals when filter absorption or adsorption is taking place and when filter desorption is taking place.

2. A filtration system as claimed in claim 1, wherein the control system is further adapted to determine from the degree of filter loading with the target gas and the current sensor arrangement signals the rate of absorption or adsorption, or desorption.

3. A filtration system as claimed in claim 1 or 2, wherein the control system comprises a heater (14) for heating the filter.

4. A filtration system as claimed in claim 1 or 2, wherein the filter further comprises a catalyst filter.

5. A filtration system as claimed in claim 4, wherein the catalyst filter comprises a photo-catalytic filter and the control system further comprises a light source (18) for illuminating the photo-catalytic filter.

6. A filtration system as claimed in claim 1, wherein the filter (12) is part of an air purifier, and the control system is adapted to switch off the air purifier when it is determined that the concentration is above a threshold and the filter is operating in a desorption regime.

7. A filtration system as claimed in claim 1, wherein the control system is further adapted to provide an output which indicates when additional ventilation of the space with outdoor air is desirable.

8. A filtration system as claimed in claim 1, wherein the gas sensor comprises a formaldehyde sensor, and wherein the filter comprises an absorption formaldehyde filter.

9. A method of controlling a filtration system for removing a target gas from a gas to be filtered in a space, the method comprising:
sensing a concentration of the target gas in the space;
filtering the target gas from the air, wherein the filtering makes use of an absorption filter or an adsorption filter; and
implementing different modes of operation of the filtration system,
the method comprises, based on a current sensed concentration, a previously sensed concentration and previously adopted modes of operation:
determining a degree of filter loading with the target gas; and
selecting a mode of operation based on the degree of filter loading and the current sensor arrangement signals
**characterized in that**:
the method further comprises determining, from the degree of filter loading with the target gas and the current sensed concentration, when filter absorption or adsorption is taking place and when filter desorption is taking place.

10. A method as claimed in claim 9, comprising determining, from the degree of filter loading with the target gas and the current sensed concentration the rate of absorption or adsorption, or desorption.

11. A method as claimed in claim 9, wherein one mode of operation comprises heating the filter and another mode of operation comprises illuminating a photo-catalytic filter.

12. A method as claimed in claim 9, wherein the filtering step is carried out by an air purifier, the method further comprising switching off the air purifier when it is determined that the concentration is above a threshold and the filter is operating in a desorption regime.

13. A computer program comprising code for implementing a method according to claims 9-12 of controlling a filtration system according to claims 1-8 for removing a target gas from a gas to be filtered in a space, wherein the method is performed when said program is run by a controller for controlling a control system of the filtration system.

## Patentansprüche

1. Ein Filtrationssystem zum Entfernen eines Zielgases aus einem zu filternden Gas in einem Raum, wobei das Filtrationssystem Folgendes umfasst:
eine Sensoranordnung (10), die einen Gassensor zum Erfassen der Konzentration des Zielgases im Raum umfasst;
einen Filter (12) zum Filtern des Zielgases aus der Luft, wobei der Filter einen Absorptionsfilter oder einen Adsorptionsfilter umfasst; und
ein Steuerungssystem, das ein Belüftungssystem (22) zum geregelten Durchleiten von Luft durch den Filter umfasst, wobei das Steuerungssystem verschiedene Betriebsmodi des Filtrationssystems implementiert,
wobei das Steuerungssystem beruhend auf aktuellen Signalen der Sensoranordnung, früheren Signalen der Sensoranordnung sowie vorherigen Betriebsmodi folgende Schritte durchführt:
Ermitteln des Grads der Filterbeladung mit dem Zielgas; und
Auswählen eines Betriebsmodus beruhend auf dem Grad der Filterbeladung und den aktuellen Signalen der Sensoranordnung, wobei sich das Filtrationssystem dadurch auszeichnet, dass
das Steuerungssystem zudem anhand des Grads der Filterbeladung mit dem Zielgas sowie der aktuellen Signale der Sensoranordnung ermittelt, wann eine Filterabsorption oder -adsorption und wann eine Filterdesorption stattfindet.

2. Ein Filtrationssystem gemäß Anspruch 1, wobei das Steuerungssystem zudem anhand des Grads der Filterbeladung mit dem Zielgas sowie der aktuellen Signale der Stromsensoranordnung die Absorptions- oder Adsorptions- bzw. die Desorptionsrate ermittelt.

3. Ein Filtrationssystem gemäß Anspruch 1 oder 2, wobei das Steuerungssystem ein Heizelement (14) zum Beheizen des Filters umfasst.

4. Ein Filtrationssystem gemäß Anspruch 1 oder 2, wobei der Filter zudem einen Katalysatorfilter umfasst.

5. Ein Filtrationssystem gemäß Anspruch 4, wobei der Katalysatorfilter einen photokatalytischen Filter umfasst und das Steuerungssystem zudem eine Lichtquelle (18) zum Beleuchten des photokatalytischen Filters umfasst.

6. Ein Filtrationssystem gemäß Anspruch 1, wobei der Filter (12) Teil eines Luftreinigers ist, und wobei das Steuerungssystem den Luftreiniger abschaltet, wenn ermittelt wurde, dass die Konzentration über einem Schwellenwert liegt, und dass der Filter im Desorptionsmodus ausgeführt wird.

7. Ein Filtrationssystem gemäß Anspruch 1, wobei das Steuerungssystem zudem eine Ausgabe bereitstellt, die angibt, wann der Raum zusätzlich mit Außenluft belüftet werden sollte.

8. Ein Filtrationssystem gemäß Anspruch 1, wobei der Gassensor einen Formaldehyd-Sensor umfasst, und wobei der Filter einen Absorptions-Formaldehyd-Filter umfasst.

9. Eine Methode zum Steuern eines Filtrationssystems zum Entfernen eines Zielgases aus einem zu filternden Gas in einem Raum, wobei die Methode folgende Schritte umfasst:
Erfassen der Konzentration des Zielgases im Raum;
Filtern des Zielgases aus der Luft, wobei beim Filtern ein Absorptionsfilter oder ein Adsorptionsfilter zum Einsatz kommt; und
Implementieren verschiedener Betriebsmodi des Filtrationssystems,
wobei die Methode beruhend auf der aktuell erfassten Konzentration, einer zuvor erfassten Konzentration und zuvor implementierten Betriebsmodi folgende Schritte umfasst:
Ermitteln des Grads der Filterbeladung mit dem Zielgas; und
Auswählen eines Betriebsmodus beruhend auf dem Grad der Filterbeladung und den aktuellen Signalen der Sensoranordnung,
und die sich dadurch auszeichnet, dass:
das im Rahmen der Methode zudem anhand des Grads der Filterbeladung mit dem Zielgas sowie der aktuell erfassten Konzentration ermittelt wird, wann eine Filterabsorption oder -adsorption und wann eine Filterdesorption stattfindet.

10. Eine Methode gemäß Anspruch 9, die zudem das Ermitteln der Absorptions- oder Adsorptions- bzw. der Desorptionsrate anhand des Grads der Filterbeladung mit dem Zielgas sowie der aktuellen Signale der Stromsensoranordnung umfasst.

11. Eine Methode gemäß Anspruch 9, wobei ein Betriebsmodus das Heizen des Filters und ein anderer das Beleuchten eines photokatalytischen Filters umfasst.

12. Eine Methode gemäß Anspruch 9, wobei die Filterung von einem Luftreiniger durchgeführt wird, und wobei die Methode zudem das Abschalten des Luftreinigers umfasst, wenn ermittelt wurde, dass die Konzentration über einem Schwellenwert liegt, und dass der Filter im Desorptionsmodus ausgeführt wird.

13. Ein Computerprogramm, das Code zum Umsetzen einer Methode gemäß den Ansprüchen 9 bis 12 zum Steuern eines Filtersystems gemäß den Ansprüchen 1 bis 8 zum Entfernen eines Zielgases aus einem zu filternden Gas in einem Raum umfasst, wobei die Methode durchgeführt wird, wenn das Programm von einer Steuerung zum Steuern eines Steuerungssystems des Filtrationssystems ausgeführt wird.

## Revendications

1. Système de filtration permettant d'éliminer un gaz cible d'un gaz à filtrer dans un espace, ledit système de filtration comprenant :
un agencement de capteur (10), lequel comprend un capteur de gaz destiné à la détection d'une concentration du gaz cible dans l'espace ;
un filtre (12) destiné à la filtration du gaz cible de l'air, dans lequel le filtre comprend un filtre d'absorption ou un filtre d'adsorption ; et
un système de commande, lequel comprend un système de ventilation (22) destiné à l'entraînement de l'air de manière commandable à travers le filtre, dans lequel le système de commande est conçu pour mettre en œuvre différents modes de fonctionnement du système de filtration, dans lequel le système de commande est conçu, en fonction des signaux d'agencement de capteurs actuels, des signaux d'agencement de capteurs précédents et des modes de fonctionnement précédents :
pour déterminer un degré de charge du filtre du gaz cible ; et
pour sélectionner un mode de fonctionnement en fonction du degré de charge du filtre et des signaux de l'agencement de capteur de courant,
le système de filtration est **caractérisé en ce que** :
le système de commande est en outre conçu pour déterminer à partir du degré de charge du filtre du gaz cible et les signaux de l'agencement de capteur de courant lorsque l'absorption ou l'adsorption du filtre a lieu et lorsque la désorption du filtre a lieu.

2. Système de filtration selon la revendication 1, dans lequel le système de commande est en outre conçu pour déterminer à partir du degré de charge du filtre de la cible et des signaux de l'agencement de capteur de courant le taux d'absorption ou d'adsorption ou de désorption.

3. Système de filtration selon la revendication 1 ou 2, dans lequel le système de commande comprend un élément chauffant (14) destinée au chauffage du filtre.

4. Système de filtration selon la revendication 1 ou 2, dans lequel le filtre comprend en outre un filtre catalytique.

5. Système de filtration selon la revendication 4, dans lequel le filtre catalytique comprend un filtre photo-catalytique et le système de commande comprend en outre une source lumineuse (18) destinée à l'éclairage du filtre photo-catalytique.

6. Système de filtration selon la revendication 1, dans lequel le filtre (12) fait partie d'un purificateur d'air, et le système de commande est conçu pour arrêter le purificateur d'air lorsqu'il est déterminé que la concentration est supérieure à un seuil et le filtre fonctionne en mode de désorption.

7. Système de filtration selon la revendication 1, dans lequel le système de commande est en outre conçu pour fournir une sortie, laquelle indique quand une ventilation supplémentaire de l'espace avec de l'air extérieur est souhaitable.

8. Système de filtration selon la revendication 1, dans lequel le capteur de gaz comprend un capteur de formaldéhyde, et dans lequel le filtre comprend un filtre d'absorption de formaldéhyde.

9. Procédé de commande d'un système de filtration permettant d'éliminer un gaz cible d'un gaz à filtrer dans un espace, ledit procédé comprenant :
la détection d'une concentration du gaz cible dans l'espace ;
le filtrage du gaz cible de l'air, dans lequel le filtrage utilise un filtre d'absorption ou un filtre d'adsorption ; et
la mise en œuvre de différents modes de fonctionnement du système de filtration,
ledit procédé comprenant, en fonction d'une concentration détectée de courant, d'une concentration précédemment détectée et des modes de fonctionnement précédemment adoptés :
la détermination d'un degré de charge du filtre du gaz cible ; et
la sélection d'un mode de fonctionnement en fonction du degré de chargement du filtre et des signaux d'agencement de capteur de courant, **caractérisé en ce que** :
ledit procédé comprend en outre la détermination, en fonction du degré de chargement du filtre du gaz cible et de la concentration détectée de courant, quand l'absorption ou l'adsorption du filtre a lieu et quand la désorption du filtre a lieu.

10. Procédé selon la revendication 9, comprenant la détermination, en fonction du degré de charge du filtre du gaz cible et de la concentration détectée de courant, du taux d'absorption ou d'adsorption, ou de désorption.

11. Procédé selon la revendication 9, dans lequel un mode de fonctionnement comprend le chauffage du filtre et un autre mode de fonctionnement comprend l'éclairage d'un filtre photo-catalytique.

12. Procédé selon la revendication 9, dans lequel l'étape de filtrage est réalisée par un purificateur d'air, ledit procédé comprenant en outre l'arrêt du purificateur d'air lorsqu'il est déterminé que la concentration est supérieure à un seuil et que le filtre fonctionne dans un mode de désorption.

13. Programme informatique comprenant un code permettant de mettre en œuvre un procédé, selon les revendications 9 à 12, de commande d'un système de filtration, selon les revendications 1 à 8, pour éliminer un gaz cible d'un gaz à filtrer dans un espace, dans lequel ledit procédé est mis en œuvre lorsque ledit programme est exécuté par un contrôleur permettant de commander un système de commande du système de filtration.
